# EUROPÄISCHE PATENTSCHRIFT

(11) **EP 0 874 363 B1**
(45) Veröffentlichungstag und Bekanntmachung des Hinweises auf die Patenterteilung: **27.07.2005**
(21) Anmeldenummer: 98201202.3
(22) Anmeldetag: 15.04.1998
(51) Int. Cl.: G11B 15/32

(54) **Magnetbandkassettengerät**
Magnetic tape cassette apparatus
Appareil à cassette à bande magnétique

(30) Priorität: 26.04.1997 DE 19717777
(43) Veröffentlichungstag der Anmeldung: 28.10.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Kunze, Norbert, Röntgenstrasse 24, 22335 Hamburg (DE); Koch, Stefan, Röntgenstrasse 24, 22335 Hamburg (DE); Rumpf, Horst, Röntgenstrasse 24, 22335 Hamburg (DE)
(74) Vertreter: von Laue, Hanns-Ulrich, Dipl.-Ing.

(56) Entgegenhaltungen:
- EP-A- 0 392 491
- DE-A- 4 405 153
- US-A- 3 934 839
- US-A- 4 309 002
- US-A- 4 609 164
- US-A- 4 654 740

## Beschreibung

Die Erfindung bezieht sich auf ein Magnetbandkassettengerät mit einem Laufwerk, das drehbar um Lagerachsen gelagerte Wickeldorne aufweist, die zum Eingriff in Wickelöffnungen der Magnetbandkassette vorgesehen sind und die über ihren Umfang verteilt wenigstens eine Mitnehmerrippe aufweisen, wobei die Wickeldorne axial in einem axialen Verschiebebereich verschiebbar an den Lagerachsen angelagert und jeweils mittels wenigstens einer Feder in Richtung auf eine Vorzugsaxialstellung vorgespannt sind.

Ein derartiges Magnetbandkassettengerät ist aus der US 4 609 164 bekannt. Dieses bekannte Magnetbandkassettengerät weist drehbar um Lagerachsen gelagerte Wickeldorne auf. Die Wickeldorne greifen mit Federnasen in eine Radialnut der Lagerachsen ein, wodurch die axiale Position der Wickeldorne genau definiert ist. Die Wickeldorne weisen Mitnehmerrippen auf, die mit an den Wickelkörpern der Magnetbandkassette vorhandenen Mitnahmenasen derart zusammenwirken, daß bei Drehung der Wickeldorne die Wickelkörper der Kassette mitgedreht werden.

Es ist Aufgabe der Erfindung, ein Magnetbandkassettengerät der eingangs genannten Art zu schaffen, welches das Absenken einer Kassette auf die Wickeldorne erleichtert und Funktionsstörungen beim Absenken der Kassette auf die Wickeldorne vermeidet.

Diese Aufgabe ist im Magnetbandkassettengerät gemäß dem Oberbegriff von Anspruch 1 erfindungsgemäß dadurch gelöst, daß die Wickeldorne jeweils einen Zahnkranz aufweisen, der mit jeweils einem Zahnkranz eines Antriebsrades in Eingriff bringbar ist und daß die axiale Höhe und die axiale Position der Zahnkränze so gewählt ist, daß jeweils der Zahnkranz des Wickeldornes und der Zahnkranz des Antriebsrades im gesamten axialen Verschiebebereich miteinander in Eingriff sind.

Bei einem derartigen erfindungsgemäßen Magnetbandkassettengerät können die Wickeldorne bei Beginn einer Verkantung bzw. Verklemmung zwischen den Wickelkörpern der Kassette und den Wickeldornen axial in der Absenkrichtung der Magnetbandkassette ausweichen und so ein Verklemmen bzw. Verkanten verhindern. Damit ist ein funktionssicheres Absenken der Kassette auf die Wickeldorne gewährleistet. Mittels der Feder werden die Wickeldorne in die Vorzugsaxialstellung gedrückt. Diese Vorzugsaxialstellung ist die axiale Position der Wickeldorne, die zum Abspielen der Kassette vorgesehen ist und insbesondere durch die axiale Höhe des Magnetkopfes bestimmt ist. Falls es beim Absenken der Magnetbandkassette zu einem Verklemmen kommt und der Wickeldorn von der Kassette in eine abgesenkte Position gedrückt wird, liegen die Wickelkörper der Kassette mit ihren Mitnahmenasen auf den Mitnehmerrippen der Wickeldorne auf. Daher drehen sich die Wickelkörper der Kassette beim Antrieb des Wickeldorns in dessen abgesenkter Position nicht, während der Wickeldorn von dem Antriebsrad weitergedreht wird und sich somit freidrehen kann. Dadurch wird gewährleistet, daß der Wickeldorn aus der abgesenkten Position zurück in die Vorzugsaxialstellung hochspringen kann.

Eine vorteilhafte Ausgestaltung der Erfindung ist dadurch gekennzeichnet, daß die Federn jeweils zwischen den Lagerachsen und den Wickeldornen angeordnet sind und daß die Federn unter Abstützung an den Lagerachsen und/oder an Lagerelementen einer Chassisplatte axial gegen die Wickeldorne drücken.

Die Feder ist so ausgebildet, daß sie in axialer Richtung gegen die Wickeldorne drückt und radial auf der Lagerachse geführt wird. Für das Aufbringen der Axialkraft stützt sie sich an sich in radialer Richtung erstreckenden Lagerelementen ab. Die axiale Kraft dient sowohl der axialen Vorspannung der Wickeldorne in Richtung auf die Vorzugsaxialstellung als auch zur Erzeugung eines Reibmomentes auf den Wickeldorn, wodurch ein Gegenzugmoment erzeugt wird. Dieses Gegenzugmoment hält das Magnetband der Magnetbandkassette im Spielbetrieb straff. Somit läßt sich mittels einer einzigen Feder und eines einzigen einstückig ausgebildeten Wickeldornes sowohl ein Gegenzugmoment des Wickeldornes als auch eine axiale Ausweichmöglichkeit des Wickeldornes realisieren, wodurch ein funktionssicheres Absenken der Magnetbandkassette auf die Wickeldorne auf einfache Weise gewährleistet ist.

Bei einer weiteren vorteilhaften Ausgestaltung der Erfindung ist vorgesehen, daß die Federn einstückig ausgebildet sind.

Dies ist fertigungstechnisch besonders günstig.

Bei einer weiteren vorteilhaften Ausgestaltung der Erfindung ist vorgesehen, daß die einstückig ausgebildete Feder wenigstens drei Federarme aufweist.

Dadurch wird eine sehr gleichmäßige Verteilung der Federkraft realisiert.

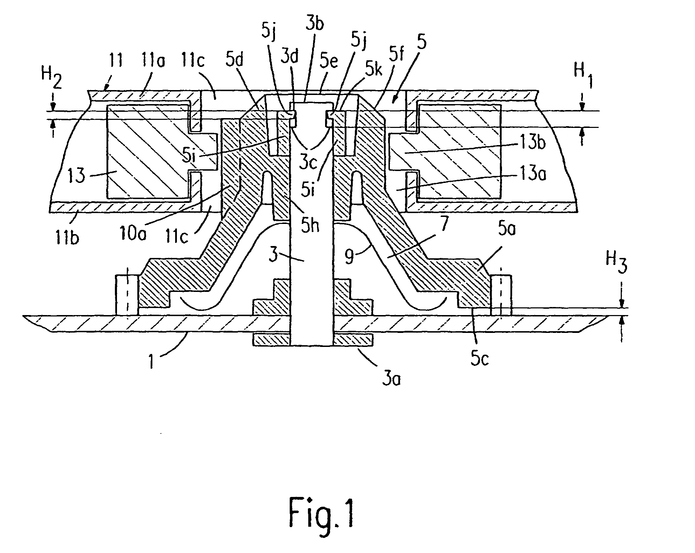

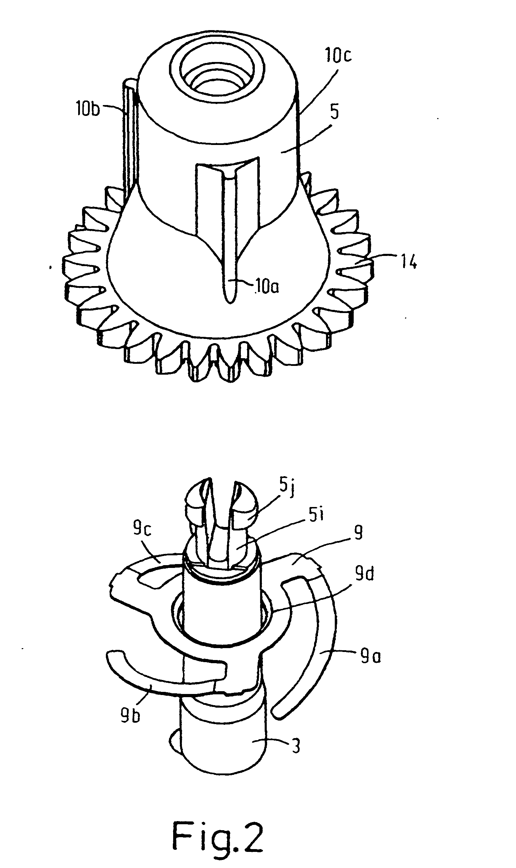

Ein schematisch dargestelltes Ausführungsbeispiel der Erfindung wird nachfolgend anhand der Zeichnung in den Figuren 1 und 2 näher erläutert. Es zeigen:
Fig. 1 einen Schnitt durch einen Wickeldorn, der axial verschieblich an einem Lagerstift einer Chassisplatte eines Magnetbandkassettengerätes angeordnet ist und mittels einer Feder in eine Vorzugsaxialstellung gedrückt ist,
Fig. 2 eine perspektivische Explosionsdarstellung des Wickeldorns.

Fig. 1 zeigt eine Chassisplatte 1 eines Laufwerks eines Magnetbandkassettengerätes, in die ein Lagerstift 3 mittels Kunststoffbefestigungsmitteln 3a in Outsert-Mouldingtechnik befestigt ist. Der Lagerstift 3 weist nahe seinem oberen Ende 3b eine Radialnut 3c mit einer axialen Höhe H1 auf. Auf den Lagerstift 3 ist ein Wickeldorn 5 aufgesetzt. Der Wickeldorn 5 hat einen Fuß 5a von kegelförmiger Gestalt, der eine Grundfläche 5c aufweist. Oberhalb des Fußes 5a befindet sich ein zylindrischer Grundkörper 5d, der an seinem oberen Ende 5e mit einer kegelförmigen Schrägfläche 5f ausläuft. Der Wickeldorn 5 weist auf den Umfang verteilt drei Mitnahmerippen 10a, 10b und 10c auf, von denen in der Fig. 1 eine erste Mitnahmerippe 10a dargestellt ist.

Der Lagerstift 3 wird innerhalb des Grundkörpers 5d in einer Führungsbuchse 5h des Wickeldornes 5 geführt. Der Wickeldorn 5 weist Federnasen 5i auf, die mit Vorsprüngen 5j in die Radialnut 3c des Lagerstiftes 3 eingreifen. Die Vorsprünge 5j weisen eine axiale Höhe H2 auf. Die axiale Höhe H2 der Vorsprünge 5j ist kleiner als die axiale Höhe H1 der Radialnut 3c des Lagerstiftes 3. Dadurch ist der Wickeldorn 5 in axialer Richtung verschiebbar an dem Lagerstift 3 angelagert.

Der Fuß 5a des Wickeldornes 5 weist einen Hohlraum 7 auf, in dem eine schematisch dargestellte Feder 9 angeordnet ist. Diese schematisch dargestellte Feder 9 stützt sich an der Chassisplatte 1, an dem Wickeldorn 5 und an dem Lagerstift 3 ab. Die Feder 9 übt eine axiale Kraft auf den Wickeldorn 5 aus und drückt den Wickeldorn 5 innerhalb der Radialnut 3c nach oben, so daß die Oberkante 5k der Vorsprünge 5j der Federnasen 5i gegen die Oberkante 3d der radialen Führungsnut 3c drückt. Zwischen der Grundfläche 5c des Wickeldornes 5 und der Chassisplatte 3 befindet sich ein Luftspalt der Höhe H3. Die Höhe H3 ist größer oder gleich der Differenz der Höhen H1 und H2.

Entgegen dieser Federkraft der Feder 9 ist der Wickeldorn 5 jedoch in axialer Richtung in Richtung auf die Chassisplatte 3 nach unten verschiebbar.

Auf den Wickeldorn 5 ist eine Magnetbandkassette 11 aufgesetzt. Die Magnetbandkassette 11 hat eine obere Deckwand 11a und eine untere Deckwnad 11b. In den Durchgriffsbereichen für Wickeldorne, von denen nur einer in Fig. 1 dargestellt ist, sind Öffnungen 11c vorgesehen, durch die der dargestellte Wickeldorn 5 hindurchgreift. Innnerhalb der Magnetbandkassette 11 sind nebeneinander jeweils zwei Spulenwickelkörper 13 angeordnet, durch deren zentrale Durchbrüche 13a die Wickeldorne 5 hindurchgreifen können. Die zentralen Durchbrüche 13a der Spulenwickelkörper 13 sind mit radial in die Durchbrüche 13a hineinreichenden Mitnahmenasen 13b versehen.

Wird eine nicht dargestellte Magnetbandkassette auf den Wickeldorn 5 aufgesetzt, so kann der Wickeldorn 5, falls es bei diesem Aufsetzen zu Verkantungen bzw. zu Verklemmungen der Spulenwickelkörper der Magnetbandkassette mit dem Wickeldorn 5 kommt, axial ausweichen. Dadurch ist ein funktionssicheres und störungsfreies Absenken der Magnetbandkassette auf den Wickeldorn 5 gewährleistet.

Beim Absenken der Kassette gleiten die Mitnahmenasen 13b der Spulenwickelkörper 13 der Kassette auf den kegelförmigen Schrägflächen 5f des Wickeldorns 5 herab und im Bereich der kegelförmigen Schrägflächen 5f des Wickeldorns 5 kann es daher zu keinen Verkantungen bzw. Verklemmungen kommen.
Verkantungen bzw. Verklemmungen treten nur dann auf, wenn die Mitnahmenasen 13b der Wickelkörper 13 auf den Mitnehmerrippen 10a, 10b bzw. 10c zum Liegen kommen. Dann wird der Wickeldorn 5 aus der Vorzugsaxialstellung in eine abgesenkte Position nach unten gedrückt.
Die Mitnahmenasen 13b der Spulenwickelkörper 13 der Kassette 11 sind dann nicht mit den Mitnehmerrippen 10a, 10b bzw. 10c in Eingriff und drehen sich daher beim Antrieb des Wickeldorns 5 in dessen abgesenkter Position nicht. Der Wickeldorn 5 wird von einem nicht dargestellten Antriebsrad weitergedreht, wodurch die Mitnehmerrippen 10a, 10b und 10c zwischen die Mitnahmenasen 13b der Spulenwickelkörper 13 gelangen und der Wickeldorn 5 infolge der Kraft der Feder 9 aus der abgesenkten Position zurück in die Vorzugsaxialstellung springen kann.

Die Feder 9 bewirkt neben der axialen Vorspannung des Wickeldornes 5 gleichzeitig ein Gegenzugmoment, durch welches das Magnetband der Magnetbandkassette 11 im Spielbetrieb straff gehalten wird. Dieses Gegenzugmoment entsteht bei Drehung des Wickeldornes 5 sowohl durch Reibung zwischen der Feder 9 und dem Wickeldorn 5 als auch durch Reibung zwischen der Radialnut 3c und den Vorsprüngen 5j der Federnasen 5i.

Fig. 2 zeigt eine perspektivische Explosionsansicht des Wickeldornes 5, des Lagerstiftes 3 und der Feder 9. Die Feder 9 ist einstückig ausgebildet, weist drei Federarme 9a, 9b und 9c auf, drückt mit diesen Federarmen axial gegen den Wickeldorn 5 und wird radial mittels eines zentralen Loches 9d geführt.

In der Fig. 2 ist neben der Mitnehmerrippe 10a auch die Mitnehmerrippe 10b erkennbar. Die Position der Mitnehmerrippe 10c ist angedeutet.

Zudem weist der Wickeldorn 5 einen Zahnkranz 14 auf. Mittels dieses Zahnkranzes 14 kann der Wickeldorn 5 von einem nicht dargestellten Antriebszahnrad drehend angetrieben werden.

## Patentansprüche

1. Magnetbandkassettengerät mit einem Laufwerk, das drehbar um Lagerachsen (3) gelagerte Wickeldorne (5) aufweist, die zum Eingriff in Wickelöffnungen der Magnetbandkassette vorgesehen sind und die über ihren Umfang verteilt wenigstens eine Mitnehmerrippe (10a,10b,10c) aufweisen, wobei die Wickeldorne (5) in einem axialen Verschiebebereich axial verschiebbar an den Lagerachsen (3) angelagert und jeweils mittels wenigstens einer Feder (9) in Richtung auf eine Vorzugsaxialstellung vorgespannt sind, **dadurch gekennzeichnet, daß** die Wickeldorne (5) jeweils einen Zahnkranz (14) aufweisen, der mit jeweils einem Zahnkranz eines Antriebsrades in Eingriff bringbar ist und daß die axiale Höhe und die axiale Position der Zahnkränze so gewählt ist, daß jeweils der Zahnkranz des Wickeldornes (14) und der Zahnkranz des Antriebsrades im gesamten axialen Verschiebebereich miteinander in Eingriff sind.

2. Magnetbandkassettengerät nach Anspruch 1, **dadurch gekennzeichnet, daß** die Federn (9) jeweils zwischen den Lagerachsen (3) und den Wickeldornen (5) angeordnet sind und daß die Federn (9) unter Abstützung an den Lagerachsen (3) und/oder an Lagerelementen einer Chassisplatte (1) axial gegen die Wickeldorne (5) drücken.

3. Magnetbandkassettengerät nach Anspruch 1, **dadurch gekennzeichnet, daß** die Federn (9) einstückig ausgebildet sind.

4. Magnetbandkassettengerät nach Anspruch 3, **dadurch gekennzeichnet, daß** die einstückig ausgebildeten Federn (9) wenigstens drei Federarme (9a, 9b, 9c) aufweisen.

5. Magnetbandkassettengerät nach Anspruch 1, **dadurch gekennzeichnet, daß** die Wickeldorne (5) einstückig ausgebildet sind.

6. Elektronisches Gerät mit einem Magnetbandkassettengerät nach Anspruch 1.

7. Fahrzeug mit einem Magnetbandkassettengerät nach Anspruch 1.

## Claims

1. A magnetic tape cassette apparatus having a tape deck comprising winding mandrels which are rotatably supported on bearing spindles, which winding mandrels are adapted to engage winding-mandrel holes in the magnetic tape cassette and comprise at least one coupling fin arranged on its circumference, while the winding mandrels (5) are mounted on the bearing spindles (3) so as to be axially movable in a range of axial movement and are each pre-loaded towards a preferred axial position by means of at least one spring (9), **characterized in that** the winding mandrels (5) each have teeth (14) which can be brought into mesh with teeth of a drive wheel and the axial height and the axial position of the teeth are selected such that the teeth of the respective winding mandrel (14) and the teeth of the drive wheel are in mesh with each other in the entire range of axial movement..

2. A magnetic tape cassette apparatus as claimed in Claim 1, **characterized in that** the springs (9) are each arranged between the bearing spindles (3) and the winding mandrel (5), and **in that** the springs (9) urge axially against the winding mandrels (5) while acting on the bearing spindles (3) and/or on bearing elements of a chassis plate (1).

3. A magnetic tape cassette apparatus as claimed in Claim 1, **characterized in that** the springs (9) are of an integral construction.

4. A magnetic tape cassette apparatus as claimed in Claim 3, **characterized in that** the integral springs (9) comprise at least three spring arms (9a, 9b, 9c).

5. A magnetic tape cassette apparatus as claimed in Claim 1, **characterized in that** the winding mandrels (5) are of an integral construction.

6. An electronic apparatus including a magnetic tape cassette apparatus as claimed in Claim 1.

7. A motor vehicle including a magnetic tape cassette apparatus as claimed in Claim 1.

## Revendications

1. Appareil à cassette à bande magnétique avec un mécanisme d'entraînement, qui présente des mandrins de bobinage (5) logés à rotation autour des axes de palier (3) qui sont prévus pour entrer en prise dans les orifices de bobinage de la cassette à bande magnétique et qui présentent au moins une nervure d'entraînement (10a, 10b, 10c) répartie sur leur périphérie, les mandrins de bobinage (5) étant logés sur les axes de palier (3) de manière axialement déplaçable dans un intervalle de déplacement axial et étant respectivement précontraints à l'aide d'au moins un ressort (9) dans la direction d'une position axiale préférée, **caractérisé en ce que** les mandrins de bobinage (5) présentent respectivement une couronne dentée (14) qui peut entrer en prise avec respectivement une couronne dentée d'une roue d'entraînement et que la hauteur axiale et la position axiale des couronnes dentées sont sélectionnées de telle sorte que la couronne dentée respective du mandrin de bobinage (14) et la couronne dentée de la roue d'entraînement entrent en prise l'une avec l'autre dans tout l'intervalle de déplacement axial.

2. Appareil à cassette à bande magnétique selon la revendication 1, **caractérisé en ce que** les ressorts (9) sont respectivement disposés entre les axes de palier (3) et les mandrins de bobinage (5) et que les ressorts (9) pressent axialement contre les mandrins de bobinage (5) en s'appuyant sur les axes de palier (3) et/ou sur les éléments de palier d'une plaque de châssis (1).

3. Appareil à cassette à bande magnétique selon la revendication 1, **caractérisé en ce que** les ressorts (9) sont conçus en une seule pièce.

4. Appareil à cassette à bande magnétique selon la revendication 3, **caractérisé en ce que** les ressorts (9) conçus en une seule pièce présentent au moins trois bras de ressort (9a, 9b, 9c).

5. Appareil à cassette à bande magnétique selon la revendication 1, **caractérisé en ce que** les mandrins de bobinage (5) sont conçus en une seule pièce.

6. Appareil électronique avec un appareil à cassette à bande magnétique selon la revendication 1.

7. Véhicule avec un appareil à cassette à bande magnétique selon la revendication 1.
